# EUROPEAN PATENT SPECIFICATION

(11) **EP 1 526 012 B1**
(45) Date of publication and mention of the grant of the patent: **08.09.2010**
(21) Application number: 03024157.4
(22) Date of filing: 20.10.2003
(51) Int. Cl.: B60G 3/14, B60G 7/02

(54) **Trailing arm suspension**
Längsarmaufhängung
Suspension à bras oscillant

(43) Date of publication of application: 27.04.2005
(73) Proprietor: AGCO GmbH, 87616 Marktoberdorf (DE)
(72) Inventor: Epple, Johann, 87616 Marktoberdorf (DE); Rathke, Gerd, 87616 Marktoberdorf (DE); Honzek, Robert, 87647 Oberthingau (DE)
(74) Representative: Morrall, Roger

(56) References cited:
- US-A- 3 020 968
- US-A- 3 081 843
- PATENT ABSTRACTS OF JAPAN vol. 007, no. 261 (M-257), 19 November 1983 (1983-11-19) & JP 58 141907 A (NISSAN JIDOSHA KK), 23 August 1983 (1983-08-23)

## Description

The invention relates to a commercial vehicle, in particular a field tractor, with a single wheel suspension for unarticulated wheels.

Conventional field tractors with unsprung wheels no longer meet the demands for higher travel speed in road traffic, greater efficiency and economic soil conditioning in field operation whilst at the same time providing the best possible driving comfort. One precondition for achieving this is a vehicle suspension with the lowest possible unsprung mass. Field tractors with a rigid axle body between the wheels, as described in DE 201 06 172 U1 and EP 0 494 286 B1, are poorly suited for meeting the requirements mentioned because of the high mass compared to that of the wheels. Moreover, the fact that the rear axle, uncoupled from the gearbox, is driven by a cardan shaft which departs from the vehicle gear, gives rise to a larger wheelbase which in turn results in a larger turning circle, thereby reducing the manoeuverability of the vehicle. In the light of this it would appear appropriate, in the case of field tractors, to dispense with a rigid axle, at least in the rear area, and to adopt a single wheel suspension of the wheels.

Independent suspension for the wheels of field tractors is known. For example, a sprung support for the driven wheels of such vehicles is described in DE-PS 484 552: A wheel shaft departing from a universal joint in the gearbox extends through an axle housing secured to the side of the gearbox and supports a wheel at its free end. In the region of the wheel the axle housing passes into a vertical, arch-shaped guide in which a bearing, also arch-shaped and supported on the wheel joint, is guided so that the wheel shaft, with the wheel, is able to swivel about the universal shaft against the force of leaf springs in the manner of transverse swinging arm. This design is relatively complicated.

A further independent suspension for wheels of field tractors, in which a wheel support is guided by means of several transverse swinging arms, was presented by the company John Deere at AGRITECHNICA, which was held in Hanover, Germany in November 2001. However, the three transverse swinging arms and the cardan shaft driving the wheel are fully unprotected and therefore require a high degree of maintenance.

US 3020968 discloses an automobile with a drive line and suspension arrangement. The vehicle has a chassis comprising a double skinned frame with front and rear extensions. The suspension comprises a pair of swing arms pivotably mounted on opposite sides of the chassis. The swing arms extend in the longitudinal direction of the vehicle and arc connected by respective suspension members at each end to the chassis. The drive shaft is largely unprotected and the arrangement does not provide guidance means on the chassis against lateral movement relative to the chassis during pivoting.

The objective of this invention is to provide a vehicle with a technically simple independent suspension for wheels mounted on a wheel support, which suspension protects the cardan shaft driving the wheels from harmful influences, and has a low unsprung mass.

Thus according to the present invention there is provided a vehicle drive line and suspension arrangement as specified in claim 1.

Since the length of the longitudinal extending swinging arms does not affect the length and width of the vehicle, longer swinging arms may be used and longer spring travel can therefore be achieved.

The integral design of the wheel support as part of each longitudinal swinging arm, as specified in claim 2, provides an arrangement having a small number of components thus, simplifying maintenance.

Technically simple guidance of the swinging arms on the chassis is provided by the arrangement specified in claims 4 to 7.

By means of such guidance it is possible to reduce the loading of the chassis considerably in the area of the pivoting of the swinging arms on the chassis, since the guide absorbs most of the lateral forces acting on the wheels.

In order to minimise torque to be transmitted by the drive shafts, and hence also the external dimensions of the drive shafts themselves, a reduction gear may be mounted in the wheel support.

The arrangement may include a wheel brake comprising a brake disc and a brake saddle mounted in each swinging arm housing which extends towards the gearbox and wherein the brake saddle is pivotable between active and inactive positions, the housing including a shutter covering an opening in the wall of said housing and the brake being accessible through said shutter. Such an installation facilitates easy inspection and repair of the brake.

The invention will now be described by way of example only, with reference to the following drawings in which:
- Fig. I: is a first embodiment of a vehicle driveline and wheel suspension with a longitudinal swinging arm guided in a straight guide, in a side elevation,
- Fig. 2: is a plan view of the vehicle driveline and wheel suspension according to Fig. 1 from above,
- Fig. 3: is a side view of a second embodiment of a vehicle driveline and wheel suspension with a longitudinal swinging arm guided by means of transverse swinging arms;
- Fig. 4: is a plan view of the driveline and wheel suspension according to Fig. 3 from above;
- Fig. 5: is a side view of a third embodiment of a vehicle driveline and wheel suspension with a reduction gear installed in the gearbox, in contrast to the embodiments shown in Figs. 1 to 4; and
- Fig.6: is a plan view of the vehicle driveline and wheel suspension according to Fig. 5.

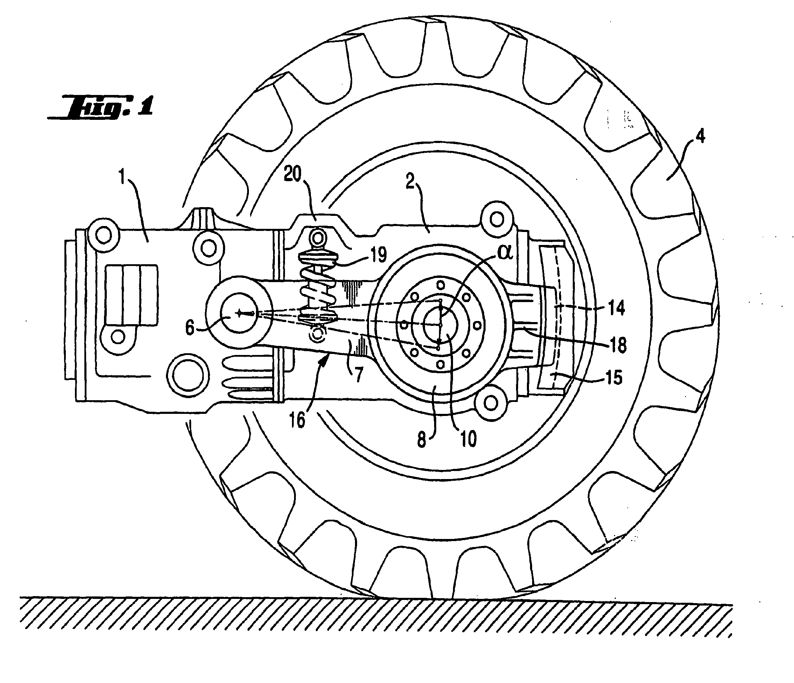

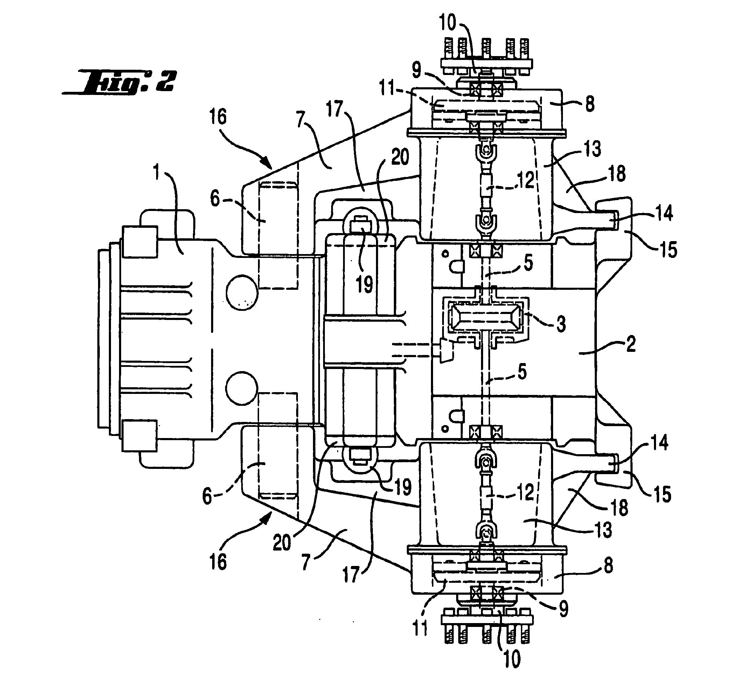

Figs. 1 and 2 relate to a driveline and wheel suspension for a field tractor, of which only two gearboxes 1 and 2, combined to form one unit, are shown. The front gearbox 1 contains a driving gear; a differential gear 3 is housed in the rear gearbox 2 for driving the rear unarticulated wheels 4 of the vehicle. The driven shafts 5 of differential gear 3, extend from the right and left of gearbox 2.

Each swinging arm 16, of a pair of swinging arms 16 comprises a member 7, which member mounts a wheel support towards the free end thereof, and at the other end thereof is mounted pivotaly on a shaft 6 in front of driven shafts 5, in the longitudinal direction of the vehicle, a respective one swing arm of the pair being mounted on either side of the gearbox 1. The said wheel support houses not only bearings 9 for supporting wheel shaft 10, which in turn supports a wheel 4, but also a reduction gear 11, these components being of prior art and are not therefore shown in detail. A reduction gear 11 is required to reduce the relatively high speeds of driven shafts 5 to the low speeds of wheels 4 used in field tractors.

Compared to the predetermined gauge of the field tractor, the width of gearbox 2 is small. Since wheel bearings 9 are to be located as close to wheel 4 as possible, a cardan shaft 12 is used to transmit power from driven shaft 5 to reduction gear 11. The cardan shaft 12 is in tow halves which can slide relative to each other in the known manner to accommodate the relative movements between shaft 5 and reduction gear 11 resulting from movements of the swinging arm 16. The arrangement of reduction gear 11 in wheel support 8 is such that the torque loading of cardan shaft 12 remains low because of its high speed and cardan shafts with small dimensions can be used.

To ensure that cardan shaft 12 is protected against undesirable environmental influences whilst the vehicle is operating, a wheel support extension housing, inside which cardan shaft 12 is securely housed, extends from wheel support 8 directly to gearbox 2. A slide 14, attached to wheel support extension housing 13 in the immediate vicinity of and parallel with gearbox 2 slides in a longitudinal guide 15 secured to gearbox 2. This relieves spring arm 7 and its shaft 6 of acting laterally on the wheels.

Webs 17, 18 provided between member 7 and wheel support extension housing 13, and between wheel support extension housing 13 and slide 14, stiffen the entire longitudinal swinging arm 16, consisting of member 7, wheel support 8, wheel support extension housing 13 and slide 14. Here web 17 serves as a support for a spring and damping element 19, which absorbs the spring excursion of longitudinal swinging arm 16, denoted by, and which is supported on a mounting surface 20 of gearbox 2.

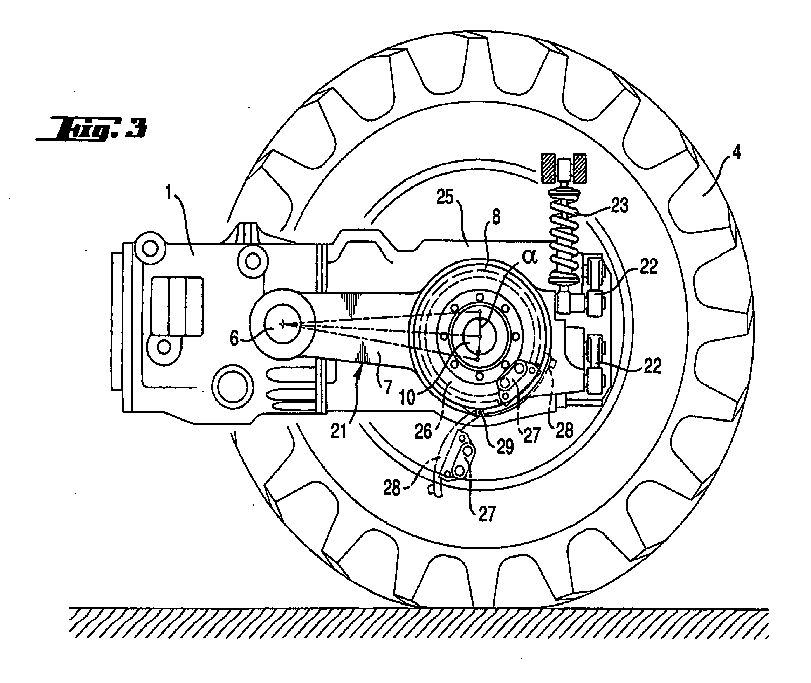

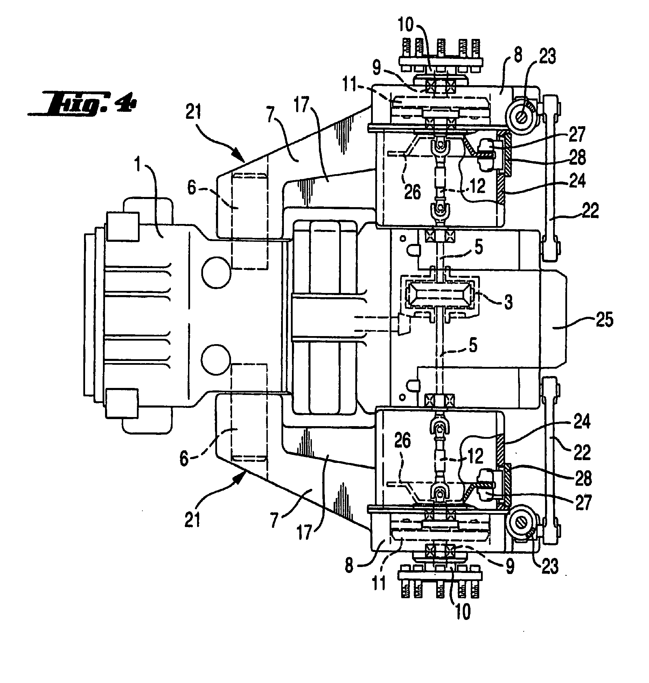

The embodiment shown in Figs. 3 and 4 is distinguished, in terms of the wheel suspension itself, in that instead of a straight guide for longitudinal swinging arm 21, a transverse swinging arm 22, articulated between wheel support 8 and gearbox 25, is provided. Moreover, a spring leg 23 is arranged between wheel support extension housing 24 and gearbox 25.

Furthermore, a wheel disc brake is arranged in wheel support extension housing 24, where disc brake 26 lies in the drive line between cardan shaft 12 and reduction gear 11, and brake saddle 27 projects through an opening into wheel support extension housing 24 and is secured to a shutter 28 sealing the opening. Shutter 28 is mounted on wheel support extension housing 24 by means of hinges 29, and when swivelled outwards it enables the disc brake to be easily inspected.

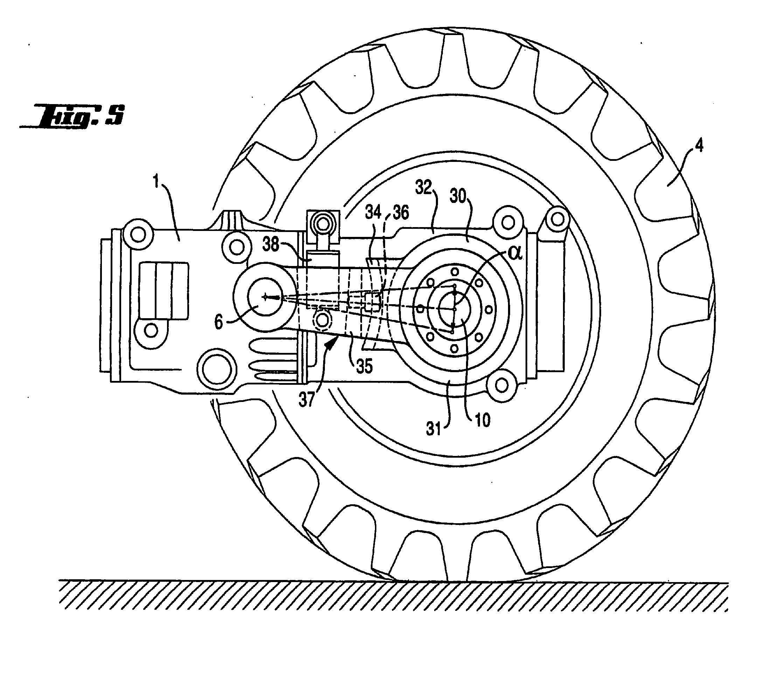

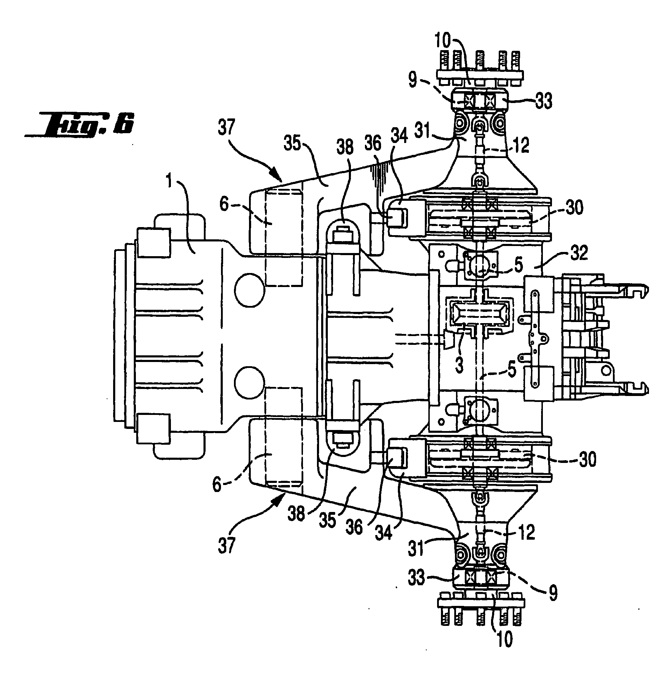

The embodiment shown in Figs. 5 and 6 differs very little from the embodiments previously described in terms of the wheel suspension itself, except that reduction gear 30 is not assigned to wheel support extension housing 31 but to gearbox 32, the diameter of wheel support 33 may therefore be kept small. The part of gearbox 32 receiving reduction gear 30 is provided with a longitudinal guide 34 in which engages a slide 36 rigidly connected to member 35, thereby providing a safe guide for longitudinal swinging arm 37. Longitudinal swinging arm 37 is suspended as described in Fig. 1, by means of a spring leg 38.

## Claims

1. A vehicle driveline and suspension arrangement comprising a hollow chassis (1,2) which extends longitudinally relative to the vehicle and which contains a driveline for transmitting power to a pair of wheels (4) suspended from the chassis, each wheel being mounted on a swinging arm (16) which is pivoted (6) at one end on the chassis and which extends longitudinally relative to the chassis, the other end of each swinging arm carrying a wheel support and final drive (11) for the respective wheel a respective resilient suspension member (19) connected at one end to the chassis and at the other end to each respective swinging arm, a drive shaft (12) extending transversely between each final drive (11) and a gearbox (2) which forms part of the drive line within the chassis, each drive shaft being connected with its respective final drive and the gearbox via respective flexible couplings and each drive shaft comprising a pair of shaft halves which are slidable with respect to each other, each drive shaft (12) being enclosed substantially along its entire length and each swinging arm (16) being guided (14,15) on the chassis against lateral movement relative to the chassis during pivoting.

2. An arrangement according to claim 1 wherein the wheel support is integral with each respective swinging arm (16).

3. An arrangement according to claim 1 or 2, wherein each swinging arm (16) includes a housing (13;24;31) which encircles the respective drive shaft (12) and extends towards the gearbox (2;25;32).

4. An arrangement according to any one of claims claim 1 to 3 wherein each swinging arm is guided on the chassis (1,2) by a guide (15) mounted on the chassis and a slide (14) mounted on the swinging arm, said slide being slidably mounted in the guide to constrain lateral movement of said swinging arm.

5. An arrangement according to claim 4 wherein said guide is located longitudinally between the pivot axis (6) of the swinging arm (16) on the chassis and the drive shaft (12).

6. An arrangement according to claim 4 wherein said guide is located on the opposite side of the drive shaft (12) from the swing arm pivot axis (6).

7. An arrangement according to any one of claims 1 to 3 wherein each swinging arm (16) is guided against lateral movement by a transverse swinging arm (22) mounted on the chassis (1,2).

8. An arrangement according to any of claims 1 to 7 wherein said wheel final drive includes a reduction gear (11:30).

9. An arrangement according to any of claims 3 to 8 including a wheel brake comprising a brake disc (26) and a brake saddle mounted in each swinging arm housing (24) which extends towards the gearbox (25) and wherein the brake saddle (27) is pivotable between active and inactive positions, the housing including a shutter (28) covering an opening in the wall of said housing and the brake being accessible through said shutter.

10. An arrangement according to claim 9 wherein the opening is substantially aligned with said brake saddle (27) and wherein when said shutter is opened the brake saddle passes through said opening to its inactive position.

11. An arrangement according to any preceding claim wherein a reduction gear (30) for each wheel is mounted in the chassis (32).

## Patentansprüche

1. Anordnung mit einem Antriebsstrang und einer Aufhängung oder Federung für ein Fahrzeug mit einem hohlen Chassis (1, 2), welches sich in Längsrichtung des Fahrzeugs erstreckt und welches einen Antriebsstrang zur Übertragung von Leistung an ein Paar von Rädern (4), die gegenüber dem Chassis abgestützt, aufgehängt oder gefedert sind, beinhaltet, wobei jedes Rad an einem Schwenkarm (16) montiert ist, der an einem Ende gegenüber dem Chassis verschwenkt wird und der sich in Längsrichtung zu dem Chassis erstreckt, wobei das andere Ende jedes schwingenden Arms einen Radträger und ein finales Antriebselement (11) oder Reduktionsgetriebe (11) für das zugeordnete Rad trägt und wobei ein zugeordnetes elastisches Federelement (19) an einem Ende mit dem Chassis verbunden ist und an dem anderen Ende an dem jeweils zugeordneten schwingenden Arm, mit einer Antriebswelle (12), die sich transversal zwischen jedem finalen Antriebselement (11) oder Reduktionsgetriebe (11) und einem Getriebe (2) erstreckt, welches einen Teil des Antriebsstrangs in dem Chassis bildet, wobei die Antriebswelle mit seinem zugeordneten finalen Antriebselement oder Reduktionsgetriebe (11) und dem Getriebe über zugeordnete flexiblen Kopplungen verbunden ist und jede Antriebswelle ein Paar Wellen-Hälften aufweist, die relativ zueinander gleiten können, und jede Antriebswelle (12) substantiell entlang der gesamten Länge eingeschlossen oder abgedeckt ist und jeder schwingende Arm (16) während des Verschwenkens an gegenüber oder auf dem Chassis geführt ist (14, 15) gegen eine laterale Bewegung relativ zu dem Chassis.

2. Anordnung nach Anspruch 1, **dadurch gekennzeichnet, dass** der Radträger integral mit dem zugeordneten schwingenden Arm (16) ausgebildet ist.

3. Anordnung nach Anspruch 1 oder 2, **dadurch gekennzeichnet, dass** jeder schwingende Arm (16) ein Gehäuse (13; 24; 31) aufweist, welches die zugeordnete Antriebswelle (12) einkreist oder einschließt und sich in Richtung des Getriebes (2; 25, 32) erstreckt.

4. Anordnung nach einem der Ansprüche 1 bis 3, **dadurch gekennzeichnet, dass** jeder schwingende Arm an oder gegenüber dem Chassis (1, 2) durch eine Führung (15), die an oder auf dem Chassis montiert ist, und ein Gleitelement (14), welches an oder auf dem schwingenden Arm montiert ist, geführt ist, wobei das Gleitelement gleitend in der Führung montiert ist zur Begrenzung der lateralen Bewegung des schwingenden Arms.

5. Anordnung nach Anspruch 4, **dadurch gekennzeichnet, dass** die Führung in Längsrichtung zwischen der Schwenkachse (6) des schwingenden Arms (16) auf oder an dem Chassis und der Antriebswelle (12) angeordnet ist.

6. Anordnung nach Anspruch 4, **dadurch gekennzeichnet, dass** die Führung auf der gegenüberliegenden Seite von der Antriebswelle (12) von der Schwenkachse (6) des schwingenden Arms angeordnet ist.

7. Anordnung nach einem der Ansprüche 1 bis 3, **dadurch gekennzeichnet, dass** jeder schwingende Arm (16) gegenüber einer lateralen Bewegung geführt ist durch einen transversalen schwingenden Arm (22), der an dem Chassis (1, 2) montiert ist.

8. Anordnung nach einem der Ansprüche 1 bis 7, **dadurch gekennzeichnet, dass** das finale Antriebselement für das Rad ein Reduktionsgetriebe (11: 30) aufweist.

9. Anordnung nach einem der Ansprüche 3 bis 8 mit einer Radbremse mit einer Bremsscheibe (26) und einem Bremssattel, der in jedem Gehäuse (24) des schwingenden Arms montiert ist, welches sich in Richtung des Getriebes (25) erstreckt, wobei der Bremssattel (27) verschwenkbar ist zwischen mindestens einer aktiven und einer inaktiven Position und wobei das Gehäuse eine Klappe oder einen Verschluss (28) besitzt, die oder der eine Öffnung in der Wandung des Gehäuses abdeckt und durch die oder den die Bremse zugänglich ist.

10. Anordnung nach Anspruch 9, **dadurch gekennzeichnet, dass** die Öffnung substantiell ausgerichtet ist zu dem Bremssattel (27), wobei in geöffnetem Zustand der Klappe oder des Verschlusses der Bremssattel durch die Öffnung hindurch tritt in seine inaktive Position.

11. Anordnung nach einem der vorhergehenden Ansprüche, **dadurch gekennzeichnet, dass** ein Reduktionsgetriebe (30) für jedes Rad an oder in dem Chassis (32) montiert ist.

## Revendications

1. Agencement de transmission et suspension de véhicule comprenant un châssis creux (1, 2) qui s'étend longitudinalement par rapport au véhicule et qui contient une transmission pour transmettre une puissance à une paire de roues (4) suspendues à partir du châssis, chaque roue étant montée sur un bras oscillant (16) qui pivote (6) à une extrémité sur le châssis et qui s'étend longitudinalement par rapport au châssis, l'autre extrémité de chaque bras oscillant supportant un support de roue et une transmission finale (11) pour la roue respective, un élément de suspension élastique respectif (19) relié, à une extrémité, au châssis et, à l'autre extrémité, à chaque bras oscillant respectif, un arbre de transmission (12), s'étendant transversalement entre chaque transmission finale (11) et une boîte de vitesses (2) qui fait partie de la transmission à l'intérieur du châssis, chaque arbre de transmission étant relié avec sa transmission finale respective et la boîte de vitesses par l'intermédiaire de couplages flexibles respectifs et chaque arbre de transmission comprenant une paire de moitiés d'arbre qui peuvent coulisser l'une par rapport à l'autre, chaque arbre de transmission (12) étant enfermé sensiblement sur sa longueur entière et chaque bras oscillant (16) étant guidé (14, 15) sur le châssis contre un mouvement latéral par rapport au châssis au cours du pivotement.

2. Agencement selon la revendication 1, dans lequel le support de roue est intégré avec chaque bras oscillant respectif (16).

3. Agencement selon la revendication 1 ou 2, dans lequel chaque bras oscillant (16) comprend un logement (13 ; 24 ; 31) qui encercle l'arbre de transmission respectif (12) et s'étend vers la boîte de vitesses (2 ; 25 ; 32).

4. Agencement selon l'une quelconque des revendications 1 à 3, dans lequel chaque bras oscillant est guidé sur le châssis (1, 2) par un guidage (15) monté sur le châssis et un coulisseau (14) monté sur le bras oscillant, ledit coulisseau étant monté de façon coulissante dans le guidage pour entraver le mouvement latéral dudit bras oscillant.

5. Agencement selon la revendication 4, dans lequel ledit guidage est situé longitudinalement entre l'axe de pivotement (6) du bras oscillant (16) sur le châssis et l'arbre de transmission (12).

6. Agencement selon la revendication 4 dans lequel ledit guidage est situé sur le côté opposé de l'arbre de transmission (12) par rapport à l'axe de pivotement de bras oscillant (6).

7. Agencement selon l'une quelconque des revendications 1 à 3, dans lequel chaque bras oscillant (16) est guidé contre un mouvement latéral par un bras oscillant transversal (22) monté sur le châssis (1, 2).

8. Agencement selon l'une quelconque des revendications 1 à 7, dans lequel ladite transmission finale de roue comprend un engrenage de réduction (11, 30).

9. Agencement selon l'une quelconque des revendications 3 à 8, comprenant un frein de roue comprenant un disque de frein (26) et un étrier de frein monté dans chaque logement de bras oscillant (24) qui s'étend vers la boîte de vitesses (25) et dans lequel l'étrier de frein (27) peut pivoter entre des positions active et inactive, le logement comprenant un volet (28) recouvrant une ouverture dans la paroi dudit logement et le frein étant accessible à travers ledit volet.

10. Agencement selon la revendication 9, dans lequel l'ouverture est sensiblement alignée avec ledit étrier de frein (27) et dans lequel, lorsque ledit volet est ouvert, l'étrier de frein passe à travers ladite ouverture jusqu'à sa position inactive.

11. Agencement selon une quelconque revendication précédente, dans lequel un engrenage de réduction (30) pour chaque roue est monté dans le châssis (32).
